Europäisches Patentamt

European Patent Office

Office européen des brevets

(19)

(11) Publication number: 0 197 660
A1

(12) **EUROPEAN PATENT APPLICATION**

(21) Application number: 86301688.7

(22) Date of filing: 10.03.86

(51) Int. Cl.⁴: **F 16 D 41/14**
**E 05 B 13/00, F 16 K 35/06**

(30) Priority: 03.04.85 GB 8508725
28.09.85 GB 8523980

(43) Date of publication of application:
15.10.86 Bulletin 86/42

(84) Designated Contracting States:
AT BE CH DE FR GB IT LI LU NL SE

(71) Applicant: Proven Engineering Products Limited
Kilmarnock Industrial Estate Moorfield
Kilmarnock Ayrshire KA2 0BA Scotland(GB)

(72) Inventor: Proven, Gordon
11 Milton Drive Wellpark Kilmarnock
Ayrshire KA3 7HZ Scotland(GB)

(74) Representative: Pattullo, Norman et al,
Ian G. Murgitroyd and Company Mitchell House 333 Bath
Street
Glasgow G2 4ER Scotland(GB)

(54) Lock Mechanism.

(57) A lock mechanism for interengaging first and second relatively-movable members, comprising pawl means (6) and abutment means (3) one on each of the members and arranged so that the pawl means disengages from the abutment means on movement of the first member (4) in one direction thereby preventing transfer of said movement to the second member, (2) and drivingly engages the abutment means on movement of the first member in an opposite direction, the second member being movable to a limit stop in said opposite direction, a key (13) insertable in a keyhole in the first member disposed so that actuation of the key causes the first and second members to be drivingly engaged for transferring movement from the first member to the second member in said one direction, the pawl means (6) being biassed towards a position in which it causes interruption of the profile of the keyhole to prevent insertion of the key into the keyhole and removal of the key from the keyhole, and movable from said interruption position on continued movement of the first member in said opposite direction when the second member has reached its limit stop. In this way the mechanism provides a sure indication of the status of the second member, which may form part of a valve assembly, as the absence of the key guarantees that the second member is at its limit stop.

FIG. 3

FIG. 7

## Lock Mechanism

This invention relates to a lock mechanism especially but not exclusively for use on a valve.

In many areas, for example in flow lines at power stations or chemical plants, it is essential that a series of valves should be interdependent; for example a first valve must be closed when a second valve is open, or both valves must always be open or closed simultaneously. There is therefore a need for a lock mechanism which would allow such interdependent relationships to be achieved with certainty. Hitherto this has been provided by means of bolts inserted through apertures of rotatable actuating handles on the valves and through apertures on a fixture which mate with the apertures in the handles when the valves are in a fully open or fully closed position. When the bolts are in position they may be locked and released by a removable key. However, through wear of the valves the mating apertures tend to become misaligned at the valves' fully open and fully closed position as the valves may have to be screwed further down to achieve closure. The insertion of the bolts does not then guarantee full closure or opening of the valves.

According to the present invention there is provided a lock mechanism for interengaging first and second relatively-movable members, comprising pawl means and abutment means one on each of the members and arranged so that the pawl means disengages from the abutment means on movement of the first member in one direction thereby preventing transfer of said movement to the second member, and drivingly engages the abutment means on movement of the first member in an opposite direction, the second member being movable to a limit stop in said opposite direction, a key insertable in a keyhole in the first member disposed so that actuation of the key causes the first and second members to be drivingly engaged for transferring movement from the first member to the second member in said one direction, the pawl means being biassed towards a position in which it causes interruption of the profile of the keyhole to prevent insertion of the key into the keyhole and removal of the key from the keyhole, and movable from said interruption position on continued movement of the first member in said opposite direction when the second member has reached its limit stop.

The key and keyhole are preferably correspondingly non-uniformly shaped so that each keyhole can receive only a key of corresponding predetermined profile.

The pawl means may be in the form of a length of resilient material, such for example as spring steel, which can bend on deformation to move it clear of the aperture. Alternatively it may be a pivotal lever spring-biassed towards the keyhole; a pawl may extend pivotally from the lever for engaging the abutment means.

The key preferably has a shoulder, recess or other formation for receiving the pawl means to prevent withdrawal of the key from the aperture, movement of the pawl means taking it out of engagement with the shoulder.

The first member may be an actuating handle of a valve and the second member may be the valve stem.

Embodiments of the invention will now be described with reference to the accompanying drawings in which:

Figs. 1 and 2 are plan views of a valve lock mechanism of a first embodiment of this invention, with the key removed;
Figs. 3 and 4 are plan views of the mechanism of Fig. 1, with the key inserted;
Figs. 5 and 6 are sectional plan views corresponding to Figs. 1 and 2;
Figs. 7 and 8 are sectional plan views corresponding to Figs. 3 and 4;
Figs. 9 and 10 are side views of the mechanism of Fig. 1, with the key removed and inserted respectively;
Figs. 11 and 12 are sectional side views corresponding to Figs. 7 and 8 respectively;
Fig. 13 is a top plan view of a valve handle having a lock mechanism of a second embodiment of this invention;
Fig. 14 is a part section through a lower portion of the valve handle of Fig. 13;
Fig. 15 is a top plan view of the handle of Fig. 13 with the cover and fork mechanism removed for clarity and the key inserted; and
Fig. 16 is a plan view of the cover of the handle of Fig. 13.

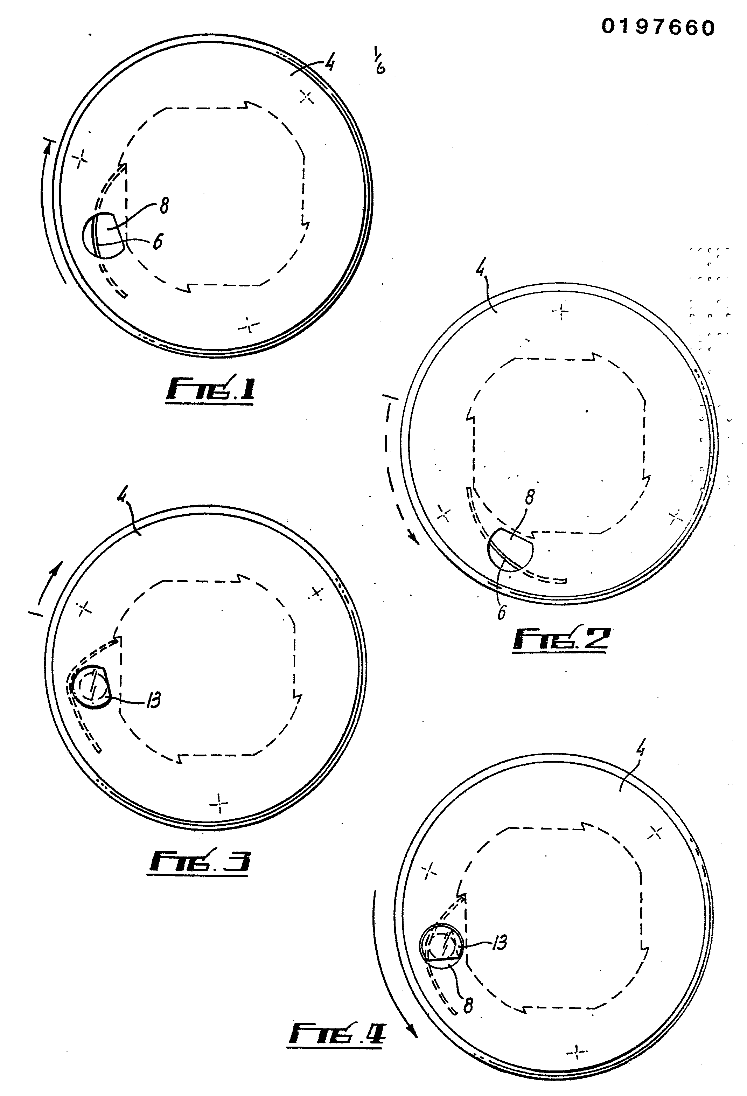

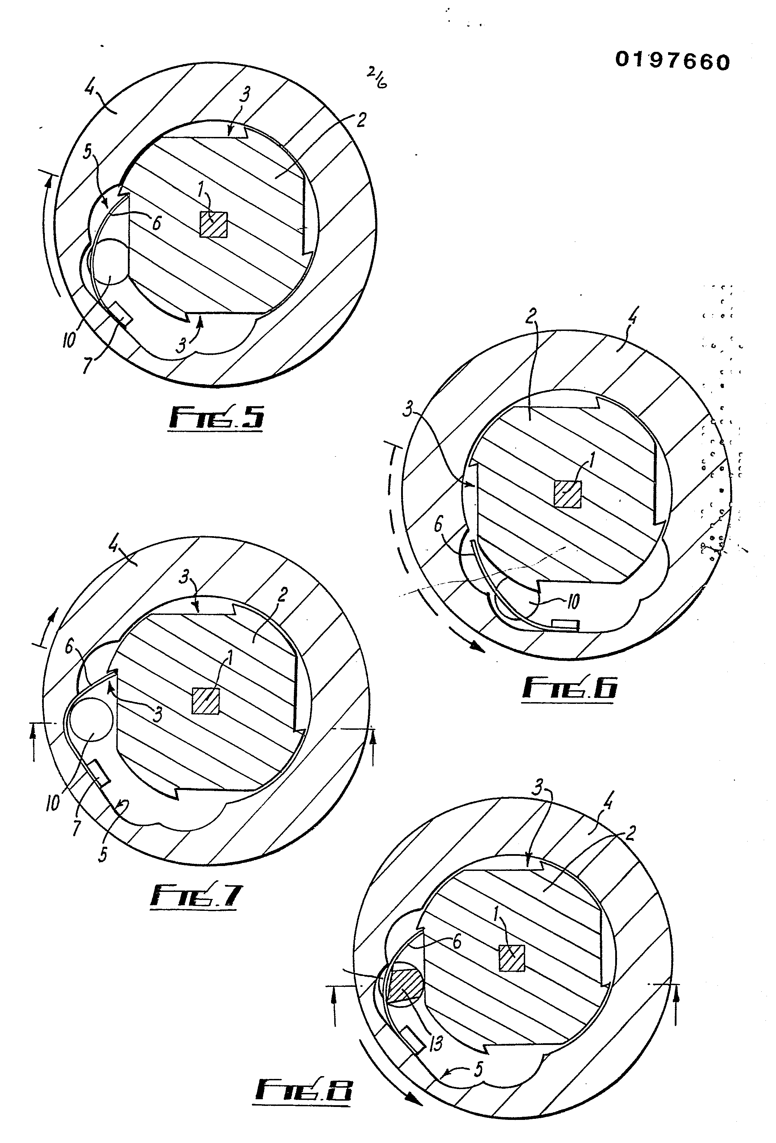

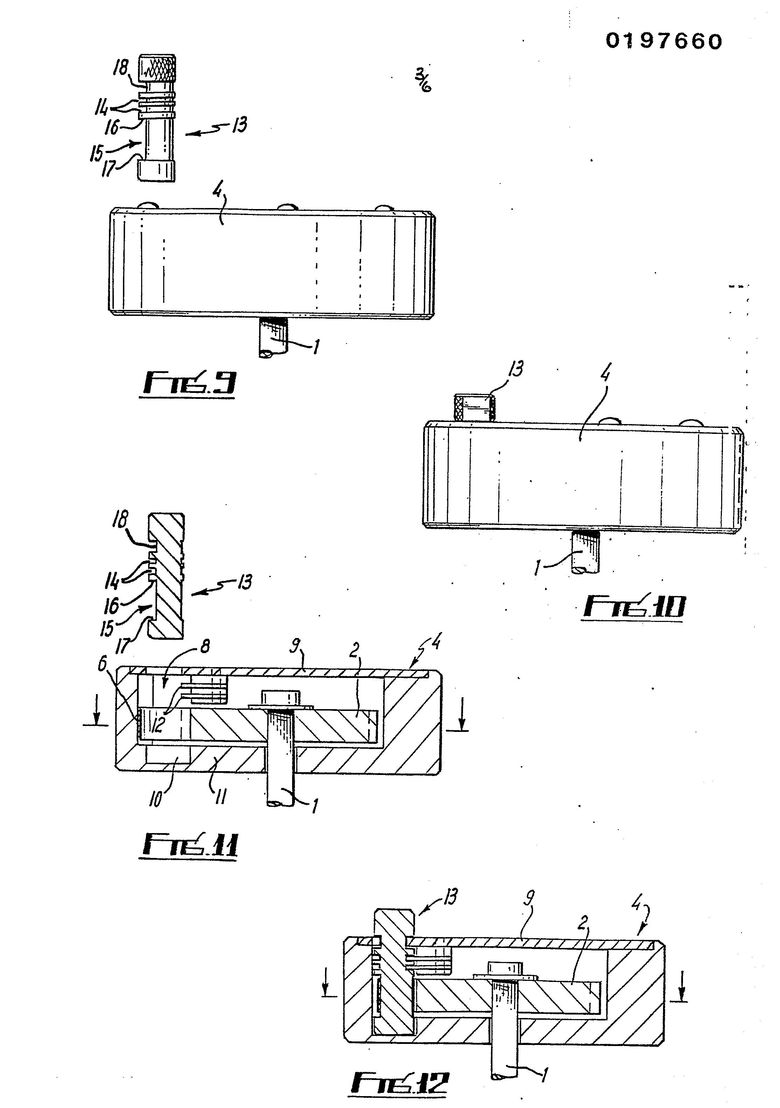

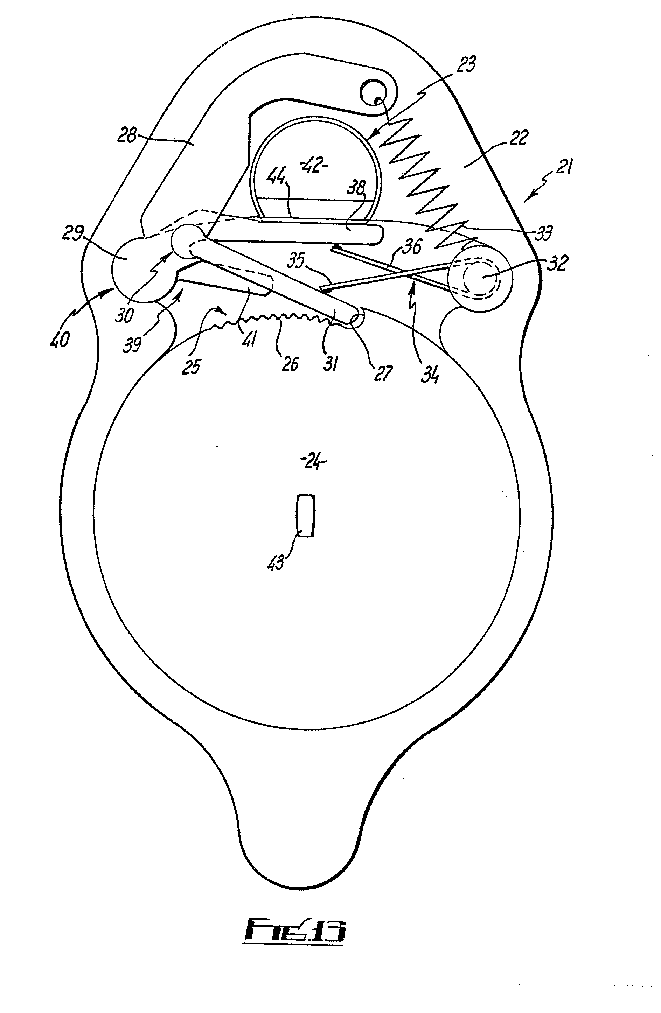

Referring to Figs. 1 to 12 of the drawings, the lock mechanism of this embodiment of the invention is fitted to a valve having a stem 1 which is screw-threaded at its lower end (not shown) and receives a valve member for opening or closing a pipeline for fluid flow. It is important that the valve should be normally closed.

The stem 1 has a square-profile section on which is fitted a generally circular plate 2 having four equispaced cut-outs 3 forming a ratchet arrangement. A hollow actuating handle 4 for the valve extends as a housing around the plate 2 and has a shaped recess 5 formed in its inner side face. A steel spring 6 is secured by a bolt 7 to the wall of the recess 5, being biassed inwardly towards the plate 2 whose outer face it engages.

The handle 4 has an aperture 8 of D-shaped profile through its upper wall 9, the aperture 8 corresponding with a circular recess 10 in the inner face of the handle's lower wall 11. A series of tabs 12 extend towards the aperture 8 below the upper wall 9.

A generally cylindrical key 13 is provided, having semi-circumferential grooves 14 for mating with the tabs 12, and a flat 15 between shoulders 16 and 17, the flat 15 being of corresponding height to the spring 6 and disposed on the key so as to be adjacent the spring 6 when the key 13 is within the aperture 8.

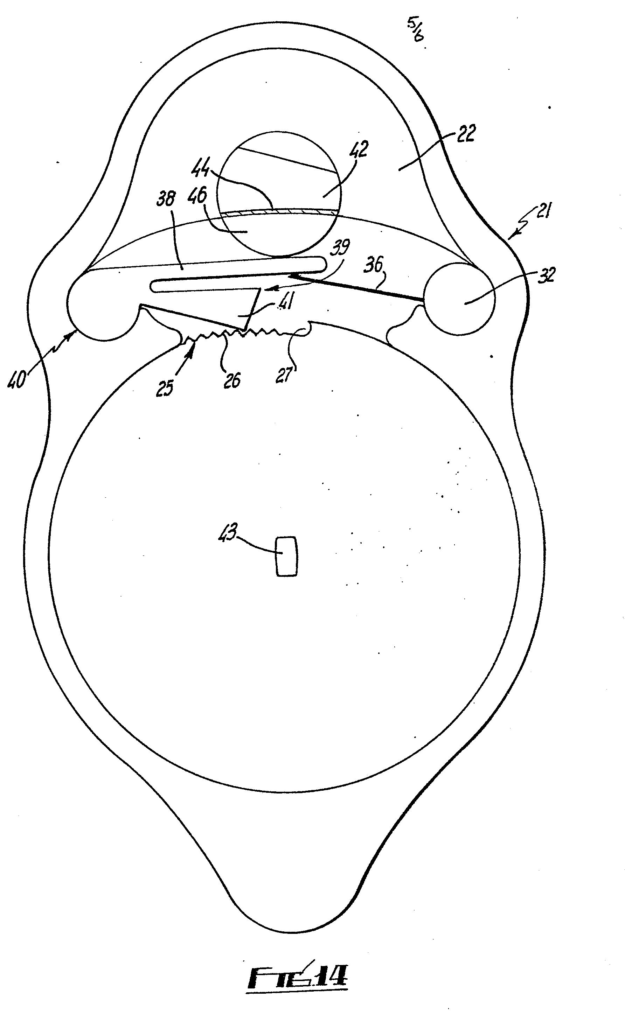

In use, the engagement of the spring 6 with the cut-outs 3 provides a ratchet-and-pawl arrangement whereby clockwise movement of the handle 4 wedges the free end of the spring 6 into the leading corner of the cut-out 3, as shown in Fig. 5, and causes the plate 2 and stem 1 to move with the handle 4. This clockwise rotation closes the valve.

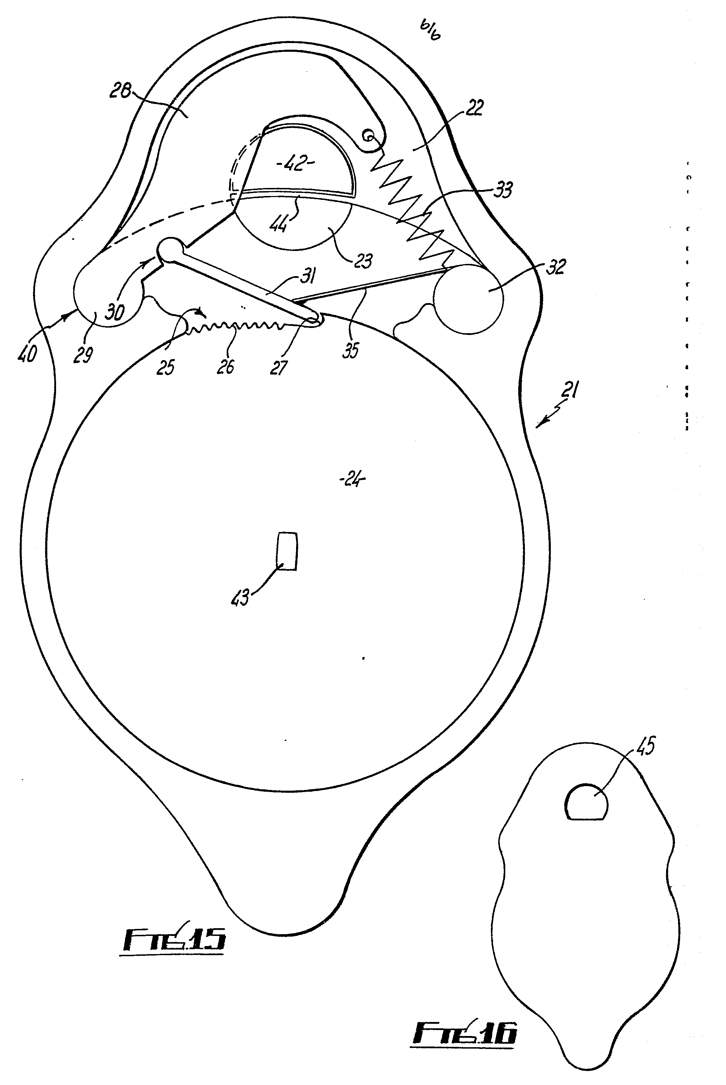

If the handle 4 is moved anticlockwise a situation as shown in Fig. 6 is achieved, where the spring 6 rides over the side wall of the plate 2 and does not enter into driving engagement with the plate. The handle 4 therefore moves freely relative to the plate 2 and stem 1 in that direction, preventing the valve from being opened.

If it is desired to open the valve, the handle 4 is first rotated clockwise until the valve is fully closed (the spring 6 engaging the cut-out 3 as shown in Fig. 5 and described above). The stem 1 and plate 2 are then against a limit stop preventing their further clockwise rotation. A clockwise force is maintained on the handle 4 so that it moves in that direction slightly relative to the plate 2, causing the spring 6 to deform outwardly against the wall of the recess 5, as shown in Fig. 7. This deformation takes the spring 6 out of the aperture 8 and opens the full cross-section of the aperture for insertion of the key 13.

With the handle 4 still under load the key 13 is inserted into the aperture 8 until its lowest portion enters and sits within the recess 10. The key 13 is inserted with its D-profile aligned with the D-profile of the aperture 8.

The key 13 is then rotated within the aperture 8, and the grooves 14 then mate with and receive the tabs 12. A further groove 18 mates with the flange of the upper wall 9 of the handle 4 which provides the straight edge of the aperture's D. The rotation of the key 13 brings its side wall into engagement with a face of the cut-out 3, and when the handle 4 is released the spring 6 moves back from its deformed position and bears against the side wall of the flat 15 of the key 13, as shown in Figs. 8 and 12. The shoulder 16 then prevents the key 13 from being withdrawn from the aperture 8.

In this position the key 13 provides a driving connection between the handle 4 and the plate 2, so that anticlockwise rotation of the handle 4 is transmitted to the plate 2 and stem 1, allowing the valve to be opened. However, the key 13 cannot be removed from the aperture 8 until the handle is again rotated clockwise past the limit stop of the stem 1 to deform the spring 6.

Thus the valve is always locked closed when the key 13 is absent from the aperture 8 and can only be opened by rotating the handle 4 further in the "closed" direction to deform the spring, and then inserting the key 13. This is of especial use where:

(1)     the "closed" status of the valve must be known at any time, which can be seen by the presence of the key at a remote location or

(2)     there are a number of interdependent valves whose "open" or "closed" status must be guaranteed before any one of them is to have its status changed. In this case a single key is provided for actuating all the valves, so that its removal from any valve guarantees that valve's status.

As a further safety feature the tabs 12 and grooves 14 may be provided at the bottom of the aperture 8 and key 13 respectively, instead of towards the top as shown in the drawings.

It will be appreciated that the plate and spring directions can be reversed to allow the valve to be opened but not closed without the key, instead of _vice versa_ as in the above embodiment.

To ensure that the torque deforming the spring is never exceeded by a jamming torque in the valve actuation, which would allow removal of the key at a position other than the desired position, a "slip" or ratchet arrangement may be provided at the extreme position of the valve opposite to that at which deformation is required, or a wedging member may be provided to urge the key into engagement with the plate but disengaging from the key as the extreme position is approached.

Referring now to Figs. 13 to 16, in this embodiment of the invention the handle is in the form of a cast metal housing 21 having a step 22 defining part of a circular recess 23. A circular plate 24 is rotatably mounted in the housing and has a cam face 25 comprising a series of serrations 26 and a recess 27. The cam face 25 is inclined radially from the recess 27 along the serrations 26.

A generally arcuate lever 28 (Fig. 14) is pivotally mounted at one end 29 within a part-circular cut-out 40 formed in the housing 21, the lever 28 itself having a part-circular cut-out 30 in its inner face.

The lever 28 extends across the circular recess 23 of the housing 21 in its normal position, and moves out of the recess 23 when pivoted against the bias of a tension spring 33 (as shown in Fig. 13).

The housing 21 is symmetrical about its centre line, and a fixed post 32 is disposed in a part-circular cut-out corresponding in size and shape to that in which the lever 28 is mounted. The tension spring 33 is fixed between the post 32 and the free end of the arcuate lever 28 to bias the lever towards the post.

Within the cut-out 30 is pivotally located a pawl 31 which is engageable in the recess 27 of the circular plate 24. A torsion spring 34 extends around the post 32, having one arm 35 bearing against the pawl 31 to bias it into engagement with the plate 24.

The opposite arm 36 of the torsion spring is below the level of the arm 35 and engages with a prong 38 of a fork member 39 (Fig. 13) which is pivotally located in the cut-out 40 below the lever 28. The arm 36 of the spring 34 biasses the fork member 39 pivotally away from the plate 24, although on opposition to the bias the second prong 41 of the fork member can engage the serrations 26 of the plate, as shown in Fig. 14.

The fork member 39 normally is biassed part-way into the recess 23 and is of a size and shape which fits snugly betwen an inserted key 42 and the serrations 26.

In use, the handle is fitted over a valve stem so that the stem extends into a correspondingly-shaped aperture 43 in the centre of the plate 24. On rotation of the handle in a clockwise direction the pawl 31 engages in the recess 27, driving the plate 24 in the same direction to close the valve. The valve cannot be opened by anticlockwise rotation of the handle as this causes the pawl 31 to leave the recess 27 and ride over the periphery of the plate 24, braking the driving connection between them.

When the valve is fully closed, a further clockwise force is applied to the handle so that slight rotation of the handle relative to the plate 24 is achieved. The fixed engagement of the pawl 31 in the recess 27 forces the arcuate lever 28 to pivot anticlockwise against the action of the tension spring 33, taking it out of the circular recess 23. With the additional force still being applied to the handle, the recess 23 is thus cleared for entry of the key 42.

The key 42 is generally D-shaped in profile to correspond with a D-shaped entry hole 45 (Fig. 16) through a cover which fits over the housing 21. The hole 45 co-operates with the recess 23.

When the key 42 has been inserted in the recess 23 and the additional clockwise force applied to the handle is released, the tension spring 33 pulls the lever 28 back towards its original position, and it locates in a reduced-diameter portion of the key 42, locking the key 42 in the recess 23 and preventing its withdrawal.

The key 42 also has a series of arcuate circumferential projections 46 (Fig. 14) which co-operate, when the key is inserted in the recess 23, with through slots formed in a partition wall 44 extending across the recess 23. Thus the key 42 is inserted with the flat face of the D against the wall 44, and is then rotated so that the projections extend through the slots in the wall 44. As they do so the projections engage with the prong 38 of the fork member 39, forcing it against the action of the torsion spring 34 until the shorter prong 41 engages the peripheral face of the plate 24 in the area of the serrations 26. The handle can then be rotated anticlockwise, and as it does so the prong 41 travels along the radially-inclined cam 25 of the plate 24, thus wedging the fork member 39 between the cam face 25 and the key 42. This provides a driving connection between the handle and the plate 24, allowing the valve to be opened by continued anticlockwise rotation of the handle.

Once the valve is fully open an additional anticlockwise force may be applied to the handle, creating a jamming effect on the valve. Were it not for the presence of the serrations 26 this could result in an artificial release of the key 42 on application of a subsequent clockwise force to the handle to force the lever 28 out of the recess 23 against the resistance of the jamming friction. However, in the present embodiment such an event causes the prong 41 to be forced into engagement with one of the serrations 26, providing a positive driving connection between the handle and plate 24 when a clockwise force is applied. This prevents the force being transferred through the pawl 31 to the lever 28, and thus maintains the lever 28 in its lock position on the key 42.

Thus it will be seen that the key 42 can only be released by application of an additional clockwise force once the valve is in its fully closed position, thus forcing the lever 28 out of engagement with the key 42. On removal of the key 42 by rotation and withdrawal from the recess 23, the fork member 39 is returned by the torsion spring 34 to a position where the prong 38 lies against the wall 44 and the prong 41 is out of engagement with the plate 24.

If the key 42 is not present in the recess 23, therefore, it is certain that the valve is fully closed.

Since the housing is symmetrical the lever 28 and fork member 39 can be transposed with the fixed post 32, and the plate 24 inverted, so that the mechanism operates in reverse. In this way the key can only be inserted and removed with the valve in its fully open position.

Modifications and improvements may be made without departing from the scope of the invention.

CLAIMS

1.    A lock mechanism for interengaging first and second relatively-movable members, comprising pawl means and abutment means one on each of the members and arranged so that the pawl means disengages from the abutment means on movement of the first member in one direction thereby preventing transfer of said movement to the second member, and drivingly engages the abutment means on movement of the first member in an opposite direction, the second member being movable to a limit stop in said opposite direction, a key insertable in a keyhole in the first member disposed so that actuation of the key causes the first and second members to be drivingly engaged for transferring movement from the first member to the second member in said one direction, the pawl means being biassed towards a position in which it causes interruption of the profile of the keyhole to prevent insertion of the key into the keyhole and removal of the key from the keyhole, and movable from said interruption position on continued movement of the first member in said opposite direction when the second member has reached its limit stop.

2.    A lock mechanism according to Claim 1, wherein the pawl means comprises a first arm pivotally mounted on the first member and a second arm pivotally mounted on the first arm, the first arm being biassed towards said interruption position and the second arm being biassed into engagement with the abutment means.

3.    A lock mechanism according to Claim 1 or 2, wherein a wedging member is provided so as to be movable between an in-use position in which it provides a driving connection between the key and the second member, and an out-of-use position in which it is disengaged from the second member, the wedging member being biassed towards said out-of-use position and movable to said in-use position on insertion and actuation of the key in the keyhole.

4.    A lock mechanism according to Claim 3, wherein the second member has a cam face with which the wedging member engages in its in-use position, the cam face tending to urge the wedging member increasingly into driving connection with the first member on movement of the first member in said one direction.

5.    A lock mechanism according to Claim 3 or 4, wherein the keyhole has an apertured wall and the key has a lateral projection which on actuation of the key passes through the apertured wall and engages the wedging member. .

6.    A lock mechanism according to any one of the preceding Claims, wherein the second member is generally circular and has a recess in its peripheral wall, said recess providing the abutment means with which the pawl means is engageable.

7.    A lock mechanism according to Claim 6, wherein the recess is provided adjacent a ratchet formation on the peripheral wall of the second member.

8.    A lock mechanism according to any one of the preceding Claims, wherein the first member forms a symmetrical housing for the second member and the pawl means, and the second member and the pawl means are reversible within the housing so that the lock mechanism acts in a reverse direction.

9.    A lock mechanism according to any one of the preceding Claims, wherein the second member is movable with a valve stem and the first member forms an actuating handle for the valve stem.

0197660

FIG.1

FIG.2

FIG.3

FIG.4

0197660

2/6

**FIG.5**

**FIG.6**

**FIG.7**

**FIG.8**

0197660

3/6

Fig.9

Fig.10

Fig.11

Fig.12

FIG.13

FIG 14

0197660

5/6

0197660

FIG.15

FIG.16

# EUROPEAN SEARCH REPORT

**European Patent Office**

**0197660**

Application number

EP 86 30 1688

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 324 659 (INTERNATIONAL PATENTS)<br>* Whole document * | 1-4,6-9 | F 16 D 41/14<br>E 05 B 13/00<br>F 16 K 35/06 |
| Y | FR-A-1 296 930 (BAINES & CO.)<br><br>* Whole document * | 1-4,6-9 | |
| Y | GB-A- 537 544 (EWART)<br>* Page 2, figures 18,19 * | 6,7 | |
| Y | US-A-1 372 993 (BOGART)<br>* Page 1, figures 4,5 * | 2 | |
| A | | 3,4 | |

**TECHNICAL FIELDS SEARCHED (Int. Cl.4)**

F 16 D 41/00
E 05 B
F 16 K

The present search report has been drawn up for all claims

| Place of search | Date of completion of the search | Examiner |
|---|---|---|
| THE HAGUE | 27-06-1986 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82